(19) Europäisches Patentamt / European Patent Office / Office européen des brevets

(11) **EP 4 776 112 A1**

(12) **EUROPEAN PATENT APPLICATION**
published in accordance with Art. 153(4) EPC

(43) Date of publication:
15.07.2026 Bulletin 2026/29

(21) Application number: 24909681.9

(22) Date of filing: 18.07.2024

(51) International Patent Classification (IPC):
*G06F 3/06* (2006.01)

(52) Cooperative Patent Classification (CPC):
G06F 3/06; G06F 3/147

(86) International application number:
PCT/CN2024/106149

(87) International publication number:
WO 2025/138727 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.12.2023 CN 202311864567

(71) Applicant: Honor Device Co., Ltd.
Shenzhen 518040 (CN)

(72) Inventors:
• HU, Dashuai
Shenzhen, Guangdong 518040 (CN)
• ZHENG, Chengzhi
Shenzhen, Guangdong 518040 (CN)
• BAI, Jian
Shenzhen, Guangdong 518040 (CN)

(74) Representative: Henselmann, Alexander Gerhard
Mitscherlich PartmbB
Karlstraße 7
80333 München (DE)

(54) **DATA STORAGE METHOD, ELECTRONIC DEVICE, AND STORAGE MEDIUM**

(57) This application provides a data storage method, an electronic device, and a storage medium, and relates to the field of data storage technologies. In the method in embodiments of this application, an electronic device may determine, based on display duration and a period in which display data is written into a first storage space, a quantity of times data is written into the first storage space, to determine, based on the quantity of times the data is written into the first storage space, whether storage performance of the first storage space is exceptional. When the storage performance of the first storage space is exceptional, the display data in the first storage space may be transferred to a second storage space for storage, the first storage space is replaced with the second storage space, and the display data of the electronic device in a subsequent display process is stored by using the second storage space. In this way, it can be avoided that the display data is lost or an error is caused by the exceptional storage performance of the first storage space, to avoid exceptional displaying of the electronic device caused by exceptional brightness compensation of an aged pixel unit on a display of the electronic device.

FIG. 3

## Description

This application claims priority to Chinese Patent Application No. 202311864567.9, filed with the China National Intellectual Property Administration on December 29, 2023 and entitled "DATA STORAGE METHOD, ELECTRONIC DEVICE, AND STORAGE MEDIUM", which is incorporated herein by reference in its entirety.

## TECHNICAL FIELD

This application relates to the field of data storage technologies, and in particular, to a data storage method, an electronic device, and a storage medium.

## BACKGROUND

To avoid a data loss, an electronic device usually stores some important data in a non-volatile memory (for example, a flash (flash)), to avoid a loss of important data after the electronic device is powered off, causing an exception to occur in the electronic device. However, a quantity of read/write times of the non-volatile memory is limited. When the quantity of read/write times of the non-volatile memory reaches a limited quantity of times, storage performance of the non-volatile memory deteriorates, causing an exception to occur in the data stored in the non-volatile memory, and affecting services to be processed based on the data.

For example, in a display process, some mobile phones continuously write display data (for example, brightness, a temperature, and a frame rate) of a display (or referred to as "screen anti-burn-in data") into a flash of a display driver integrated circuit (display driver integrated circuit, DDIC) for storage. Then, the DDIC reads the display data from the flash, and performs brightness compensation on an aged pixel unit on the display of the mobile phone based on the display data. However, when a quantity of erase/write times of the flash of the DDIC is excessive, and storage performance of the flash is exceptional, the stored display data is exceptional. As a result, brightness compensation performed by the DDIC on the aged pixel unit on the display of the mobile phone is exceptional, and displaying of the mobile phone is exceptional.

## SUMMARY

Some implementations of this application provide a data storage method, an electronic device, and a computer-readable storage medium. The following describes this application from a plurality of aspects, and mutual reference may be made to implementations and beneficial effect of the following plurality of aspects.

According to a first aspect, this application provides a data storage method, applied to an electronic device. The electronic device includes a first storage space and a second storage space. The method includes: writing first display data into the first storage space; determining that a first quantity of times data is written into the first storage space is greater than a preset quantity of times, where the first quantity of times is determined based on duration in which the electronic device displays a picture and a first period in which the data is written into the first storage space when the electronic device displays the picture; and transferring the first display data to the second storage space.

It may be understood that the preset quantity of times may be any quantity of write times of the data before storage performance of the first storage space is exceptional, for example, 400,000 times or 500,000 times. The first quantity of times may be a ratio of the duration in which the electronic device displays the picture to the first period in which the data is written into the first storage space when the electronic device displays the picture.

The first quantity of times the display data is written into the first storage space, namely, a quantity of erase/write times, may be accurately determined based on the duration in which the electronic device displays the picture and the first period in which the data is written into the first storage space when the electronic device displays the picture. When the quantity of erase/write times of the first storage space is greater than the preset quantity of times, the electronic device may transfer the display data in the first storage space to the second storage space for storage. In this way, the electronic device can accurately determine time when an exception occurs in the first storage space; and when the exception occurs in the first storage space, the second storage space stores the display data of the electronic device, to avoid an exception of the stored display data caused by exceptional storage performance of the first storage space. As a result, brightness compensation for a display of the electronic device is exceptional, and further, displaying of the display of the electronic device is exceptional.

The first display data may be display data when the electronic device displays the picture before the electronic device transfers the first storage space to the second storage space.

In some implementations, the method further includes: obtaining second display data, and storing the second display data in the second storage space.

After the first display data stored in the first storage space is transferred to the second storage space, the first storage space may be replaced with the second storage space, and the second display data in a subsequent display process of the electronic device is stored in the second storage space, to avoid an exception of the stored display data.

The second display data may be display data when the electronic device displays the picture after the electronic device transfers the display data in the first storage space to the second storage space.

In some implementations, the display data is used to compensate for brightness of the displayed picture.

In some implementations, the display data includes at least one of the following: brightness, a gray scale, a temperature, and a frame rate.

In a display process of the electronic device, the electronic device may determine a compensation voltage of the aged pixel unit of the display of the electronic device based on the display data such as the brightness, the gray scale, the temperature, and the frame rate, and then compensate for the aged pixel unit by using the compensation voltage, so that brightness of the aged pixel unit reaches brightness before aging, thereby implementing brightness compensation for the displayed picture on the display.

In some implementations, the first period is a period in which the display data is written into the first storage space when the electronic device displays the picture.

In some implementations, the first storage space and the first storage space are provided in a first storage medium of the electronic device.

In some implementations, the first storage space is provided in a first storage medium of the electronic device, and the second storage space is provided in a second storage medium of the electronic device.

In some implementations, the first storage medium and the second storage medium are provided on a first chip of the electronic device.

In some implementations, the first storage medium is provided on a first chip of the electronic device, and the second storage medium is provided on a second chip of the electronic device.

In some implementations, the first chip includes a display driver integrated circuit, and the second chip includes a system on a chip.

In some implementations, the transferring the first display data to the second storage space includes: checking the first display data transferred to the second storage space, to obtain a check result; and the check result indicating that the first display data in the second storage space is exceptional, re-transferring the first display data in the first storage space to the second storage space.

After transferring the display data in the first storage space to the second storage space, the electronic device may check the display data transferred to the second storage space, to determine whether the display data transferred to the second storage space is consistent with the display data in the first storage space before the transfer. If the display data transferred to the second storage space is consistent with the display data in the first storage space before the transfer, it is determined that the display data transferred to the second storage space is normal. If the display data transferred to the second storage space is inconsistent with the display data in the first storage space before the transfer, it is determined that the display data transferred to the second storage space is exceptional.

For example, the electronic device may check the display data transferred to the second storage space by using a check method such as cyclic redundancy check (cyclic redundancy check, CRC), checksum, hash check, and an error correction code (error correction code, ECC), to determine whether the display data transferred to the second storage space is exceptional. When the electronic device determines that the display data transferred to the second storage space is exceptional, the display data in the first storage space needs to be re-transferred to the second storage space.

According to a second aspect, an implementation of this application provides an electronic device. The electronic device includes: a memory, configured to store instructions executed by one or more processors of the electronic device; and a processor, where when the processor executes the instructions in the memory, the electronic device may be enabled to perform the method according to the first aspect of this application. For beneficial effect that can be achieved in the second aspect, refer to beneficial effect of the method provided in any implementation of the first aspect. Details are not described herein again.

According to a third aspect, an implementation of this application provides a computer-readable storage medium. The computer-readable storage medium stores instructions; and when the instructions are executed on a computer, the computer may perform the method according to any implementation of the first aspect. For beneficial effect that can be achieved in the third aspect, refer to beneficial effect of the method provided in any implementation of the first aspect. Details are not described herein again.

According to a fourth aspect, an implementation of this application provides a computer program product. The computer program product includes a computer program (which may also be referred to as code or instructions). When the computer program is run, a computer is enabled to perform the method according to any possible implementation of the first aspect. For beneficial effect that can be achieved in the fourth aspect, refer to beneficial effect of the method provided in any implementation of the first aspect. Details are not described herein again.

**BRIEF DESCRIPTION OF DRAWINGS**

FIG. 1 is an example application scenario of this application;
FIG. 2 is an example diagram of a structure of an electronic device according to an embodiment of this application;
FIG. 3 is an example flowchart of a data storage method according to an embodiment of this application;

FIG. 4 is an example diagram of a structure of another electronic device according to an embodiment of this application;

FIG. 5 is an example diagram of a structure of another electronic device according to an embodiment of this application;

FIG. 6 is an example diagram of a structure of another electronic device according to an embodiment of this application;

FIG. 7 is an example comparison diagram of a structure of an electronic device to which the technical solutions of this application are applicable;

FIG. 8 is an example diagram of a structure of another electronic device according to an embodiment of this application;

FIG. 9 is an example diagram of a structure of another electronic device according to an embodiment of this application;

FIG. 10 is an example diagram of an architecture of a hardware and software system of an electronic device according to an embodiment of this application; and

FIG. 11 is a diagram of an architecture of an electronic device according to an embodiment of this application.

## DESCRIPTION OF EMBODIMENTS

Implementations of this application provide a data storage method. The following describes the data storage method in embodiments of this application.

The technical solutions of this application are applicable to various electronic devices with a display, for example, a mobile phone, a tablet, a large-screen device, a wearable device (for example, a watch, smart glasses, or a helmet), a computer, and an augmented reality (augmented reality, AR)/virtual reality (virtual reality, VR) device. This is not limited.

The display of the electronic device of this application may be an organic light-emitting diode (organic light-emitting diode, OLED) screen, an active-matrix organic light-emitting diode (active-matrix organic light-emitting diode, AMOLED) screen, or the like, or may be another screen that uses an organic light-emitting material to emit light.

The following uses a mobile phone with an OLED screen as an example of the electronic device to describe the technical solutions of this application.

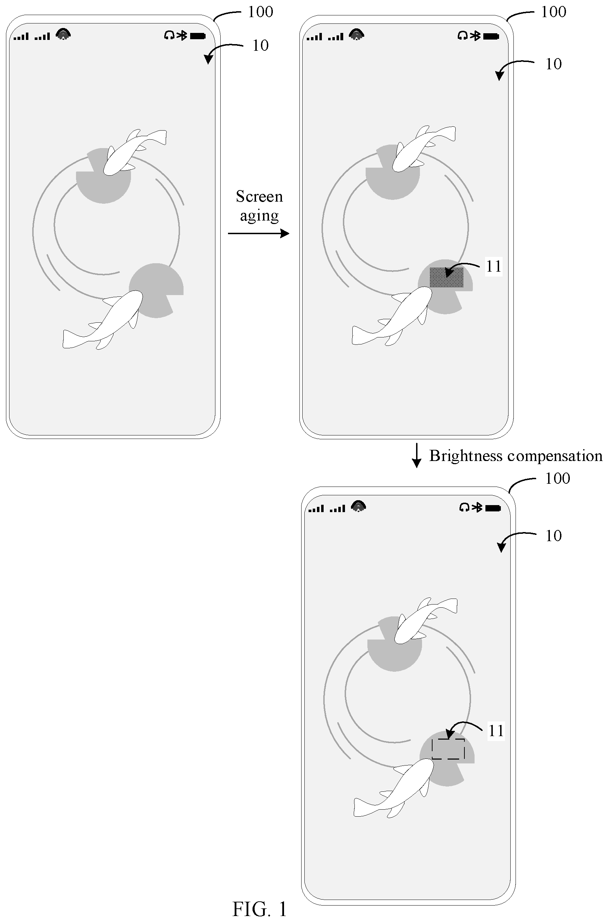

FIG. 1 is an example application scenario of this application.

Refer to FIG. 1. The electronic device 100 includes a display 10. The display 10 is an OLED screen. Core components of the OLED screen include an electroluminescent (electroluminescent, EL) circuit. The EL circuit includes structures such as an electron transport layer, a hole transport layer, and a light-emitting layer. When the OLED screen works, the EL circuit drives, under an action of a current and a voltage, an organic material of each pixel unit in the light-emitting layer to change a molecular structure, to release a photon and achieve light-emitting effect. However, as use time increases, organic materials of some pixel units in the light-emitting layer may gradually age and degrade, resulting in changes in parameters such as brightness and a color of the screen, thereby affecting display effect such as dimness or partial image residue.

For example, as shown in FIG. 1, after a pixel unit of a display area 11 on the display 10 of the electronic device 100 ages, brightness of the display area 11 decreases compared with brightness before aging. As a result, displaying of the display 10 is exceptional, and use of a user is affected. In this case, the electronic device 100 may perform voltage compensation on the pixel unit of the display area 11, to drive the aged pixel unit by using a higher voltage, so that the aged pixel unit can reach the brightness before aging.

For example, the pixel unit of the display area 11 on the display 10 of the electronic device 100 may reach 200 nits when being originally driven by a voltage of 3 V. After the pixel unit of the display area 11 on the display 10 of the electronic device 100 ages, the pixel unit of the display area 11 can reach only 150 nits under driving of the voltage of 3 V, and the brightness of the pixel unit can reach 200 nits under driving of 3.5 V. In this case, the electronic device 100 may additionally supply a compensation voltage of 0.5 V to the pixel unit of the display area 11 on the display 10 through a voltage compensation circuit, and drive the brightness of the pixel unit of the display area 11 on the display 10 to reach 200 nits by using a voltage of 3.5 V, so that the pixel unit of the display area 11 on the display 10 is restored to the brightness before aging.

The following describes a voltage compensation principle of an aged pixel unit.

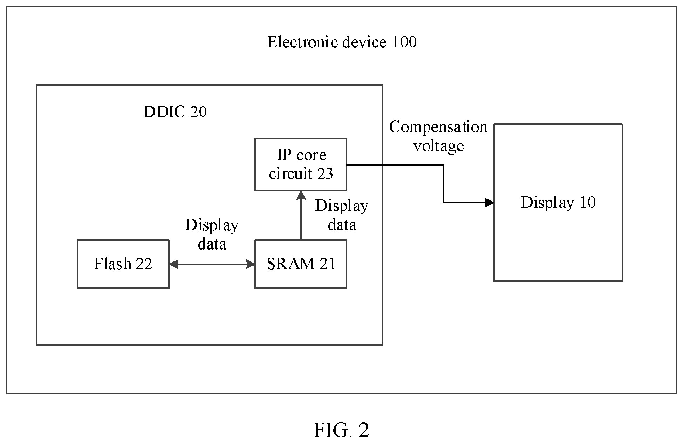

FIG. 2 is an example diagram of a structure of an electronic device according to an embodiment of this application.

As shown in FIG. 2, the electronic device 100 includes a display 10 and a DDIC 20. The DDIC 20 includes a static random access memory (static random access memory, SRAM) 21, a flash 22, and an intellectual property core (intellectual property core, IP) circuit 23 (or referred to as a "screen anti-burn-in circuit"). The SRAM 21 is separately connected to the flash 22 and the IP core circuit 23. The IP core circuit 23 is connected to the display 10.

It may be understood that the SRAM 21 is a volatile memory, and data stored in the SRAM 21 is lost when the SRAM 21 is powered off. The flash 22 is a nonvolatile memory, and data stored in the flash 22 is not lost when the flash 22 is powered off.

When the display 10 of the electronic device 100 is in a screen-on state, the electronic device 100 continuously writes display data of the display 10 (for example, brightness, a gray scale, a temperature, and a frame rate) into the SRAM 21 that serves as a buffer, and then writes the display data in the SRAM 21 into the flash 22 for storage, to avoid a loss of the display data of the display 10 when the electronic device 100 is powered off. After the display data of the display 10 is written into the flash 22, when the DDIC 20 performs brightness compensation on an aged pixel unit on the display 10, the IP core circuit 23 may read the display data of the display 10 from the flash 22 through the SRAM 21. Then, the IP core circuit 23 may determine the aged pixel unit on the display 10 based on the read display data, and calculate a voltage (referred to as a "compensation voltage") that needs to be compensated for the aged pixel unit. The IP core circuit 23 may additionally provide the calculated compensation voltage for the aged pixel unit, and drive the aged pixel unit to emit light at a higher voltage, so that the aged pixel unit reaches a brightness level before aging, thereby avoiding exceptional displaying of the display 10.

It may be understood that a principle of storing data in the flash is mainly a charge-based storage and erase operation. The flash includes a special floating gate field effect transistor, and each storage unit includes a floating gate and two silicon dioxide layers. The floating gate is made of nitride sandwiched between two layers of silicon dioxide, and is used to store a charge; and may store binary data by changing an amount of the charge in the storage unit. In the flash, data is written by applying a high voltage to the storage unit. When a voltage is applied to the storage unit, an electron is injected into the floating gate, to change the amount of the charge. When the amount of the charge is high, it indicates that "1" is stored. When the amount of the charge is low, it indicates that "0" is stored. As a quantity of erase/write times of the flash increases, the electron in the floating gate may be lost, which causes a decrease in the amount of the charge, causes storage performance of the flash to deteriorate, and affects data reliability and a read/write speed. In other words, the quantity of erase/write times (a quantity of write times) of the flash is limited, generally tens of thousands to several million times. Usually, after 500,000 times the data is written into the flash, storage performance of the flash starts to gradually decrease.

It may be learned based on the foregoing principle that when a quantity of times the display data is written into the flash 22 is excessive, storage performance of the flash 22 may deteriorate, and an exception, for example, a loss or an error, may occur in the display data stored in the flash 22. In this case, the IP core circuit 23 reads exceptional display data from the flash 22. As a result, the compensation voltage calculated by the IP core circuit 23 deviates, and the DDIC 20 under-compensates or over-compensates for the aged pixel unit on the display 10, resulting in exceptional displaying of the display 10 of the electronic device 100.

In this way, an exception of the stored display data caused by exceptional storage performance of the flash 22 is avoided. In some embodiments, when determining that the quantity of times the display data is written into the flash 22 reaches the quantity of times the data is written into the flash 22 (for example, 400,000 times or 500,000 times) when the storage performance of the flash 22 starts to deteriorate, the electronic device 100 may transfer the display data stored in the flash 22 to another storage space for storage.

However, a logic circuit for counting a quantity of read/write times of the flash 22 is not disposed in the DDIC 20. Consequently, the quantity of times the display data is written into the flash 22 cannot be determined, and whether the storage performance of the flash 22 is exceptional cannot be determined.

To resolve the foregoing technical problem, the embodiments of this application provide a data storage method. In the data storage method in the embodiments of this application, in a display process of an electronic device, the electronic device periodically writes display data into a first storage space for storage. A quantity of times the display data is written into the first storage space may be determined based on display duration of the electronic device and a period in which the display data is written into the first storage space. Then, when the quantity of times the display data is written into the first storage space is greater than a preset quantity of times (for example, a quantity of write times of the data when storage performance of the first storage space starts to deteriorate), the electronic device may transfer the display data in the first storage space to a second storage space for storage. In this way, the electronic device can accurately determine time when an exception occurs in the first storage space; and when the exception occurs in the first storage space, the second storage space stores the display data of the electronic device, to avoid an exception of the stored display data caused by exceptional storage performance of the first storage space. As a result, brightness compensation for a display of the electronic device is exceptional, and further, displaying of the display of the electronic device is exceptional.

In some embodiments, the quantity of times the display data is written into the first storage space may be a ratio of the display duration of the electronic device to the period in which the display data is written into the first storage space. The display duration may be accumulated screen-on duration of the electronic device.

It may be understood that the display data includes but is not limited to a display parameter, for example, brightness, a gray scale, a temperature, and a frame rate, in the display process of the display of the electronic device. The display data is used to compensate for brightness when the display of the electronic device displays a picture. For example, the electronic device may determine a compensation voltage of an aged pixel unit on the display based on the display data, and then provide the compensation voltage for the aged pixel unit, so that the aged pixel unit reaches a brightness level before aging under driving of a higher voltage, to implement brightness compensation for the displayed picture on the display.

It may be understood that the first storage space and the second storage space may be provided in a same storage medium, or may be provided in different storage media. For example, the first storage space and the second storage space are both provided in a first storage medium. Alternatively, the first storage space is provided in a first storage medium, and the second storage space is provided in a second storage medium.

It may be understood that the first storage medium and the second storage medium may be provided on a same chip of the electronic device, or may be provided on different chips of the electronic device. For example, the first storage medium and the second storage medium are both provided on a first chip (for example, a DDIC chip). Alternatively, the first storage medium is provided on a first chip, and the second storage medium is provided on a second chip (for example, a system on a chip (system on a chip, SOC)).

It may be understood that the first storage medium and the second storage medium may be non-volatile storage media, for example, a flash, a read only memory (read only memory, ROM), a phase change memory (phase change memory, PCM), a resistive random-access memory (resistive random-access memory, RRAM), and a spin-transfer torque memory (spin-transfer torque RAM, STT-RAM).

The following describes specific embodiments of this application.

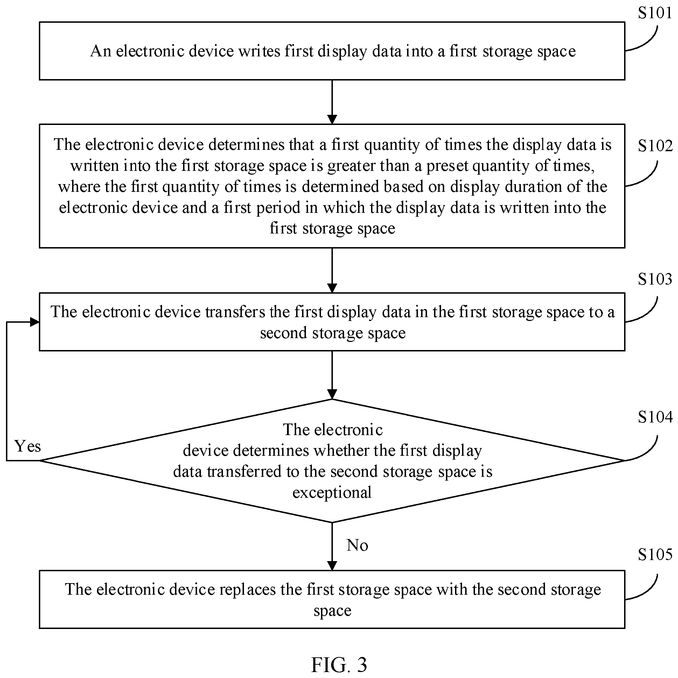

FIG. 3 is an example flowchart of a data storage method according to an embodiment of this application.

S101: An electronic device writes first display data into a first storage space.

In this embodiment of this application, a display of the electronic device is a screen made of an organic light-emitting material, for example, an OLED screen or an AMOLED screen.

In a process in which the display of the electronic device is on, the electronic device may write the first display data into the first storage space for storage when the display displays a picture.

S102: The electronic device determines that a first quantity of times the display data is written into the first storage space is greater than a preset quantity of times, where the first quantity of times is determined based on display duration of the electronic device and a first period in which the display data is written into the first storage space.

It may be understood that the preset quantity of times may be any quantity of write times of the data before storage performance of the first storage space is exceptional, for example, 400,000 times or 500,000 times. This is not limited.

In some embodiments, the electronic device may count a quantity of screen-on times of the electronic device and screen-on duration of each time of screen-on, and then calculate the display duration of the electronic device according to the following formula (1):

$$T = \sum_n^1 t_n \quad (1)$$

$T$ is display time of the electronic device, n is the quantity of screen-on times of the electronic device, and $t_n$ is screen-on duration of the electronic device in an $n$th time of screen-on.

In some embodiments, when the electronic device meets the following inequality (2), it may be determined that the first quantity of times the display data is written into the first storage space is greater than the preset quantity of times:

$$T > t_a * count \quad (2)$$

$t_a$ is the first period (for example, 10 ms, 15 ms, and 20 ms, which is not limited) in which the display data is written into the first storage space, and *count* is the preset quantity of times (for example, 400,000 times or 500,000 times, which is not limited).

Further, the foregoing formula (2) may be transformed into the following inequality (3):

$$\frac{T}{t_a} > count \quad (3)$$

$\frac{T}{t_a}$ is the first quantity of times the display data is written into the first storage space.

S103: The electronic device transfers the first display data in the first storage space to the second storage space.

After determining that the first quantity of times the display data is written into the first storage space is greater than the preset quantity of times, the electronic device may transfer the first display data in the first storage space to the second storage space for storage, to avoid a loss or an error of the stored first display data caused by deterioration of storage performance of the first storage space.

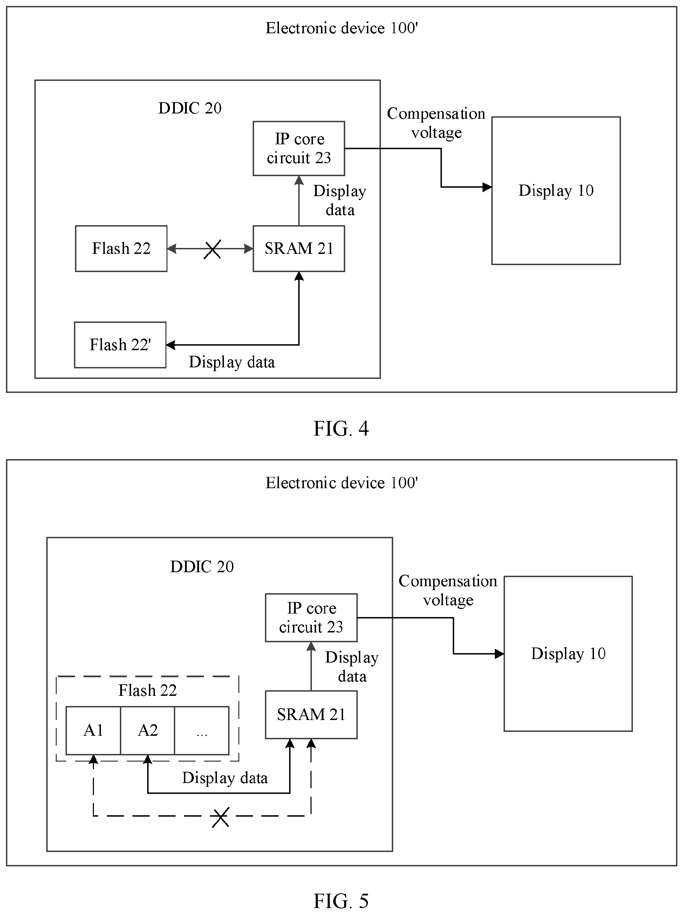

For example, FIG. 4 is an example diagram of a structure of an electronic device 100'. Refer to FIG. 4. On a basis of the electronic device 100 shown in FIG. 2, a flash 22' is added to the electronic device 100'. The electronic device 100' may first store display data by using a storage space (which is used as an example of the first storage space) of the flash 22. Then, when the electronic device 100' determines that a first quantity of times the display data is written into the storage space of the flash 22 is greater than a preset quantity of times, the display data stored in the storage space of the flash 22 may be transferred to a storage space (which is used as an example of the second storage space) of the flash 22' for storage, to avoid an exception of the stored display data caused by exceptional storage performance of the flash 22.

For another example, FIG. 5 is an example diagram of a structure of another electronic device 100'. Refer to FIG. 5. On a basis of the electronic device 100 shown in FIG. 2, the electronic device 100' divides storage space of the flash 22 into a plurality of storage spaces: a storage space A1, a storage space A2, .... The electronic device 100' may first store display data of the electronic device 100' by using the storage space A1 (which is used as an example of the first storage space). Then, when the electronic device 100' determines that storage performance of the storage space A1 is exceptional, the display data in the storage space A may be transferred to the storage space B (which is used as an example of the second storage space) for storage, to avoid an exception of the stored display data caused by the exceptional storage performance of the storage space A of the flash 22.

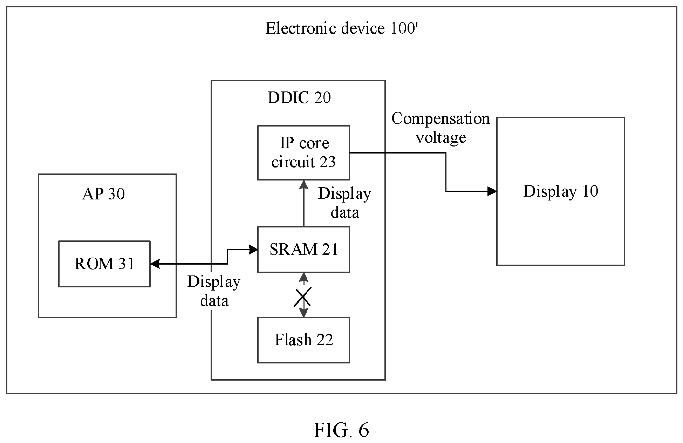

For still another example, FIG. 6 is an example diagram of a structure of still another electronic device 100'. Refer to FIG. 6. On a basis of the electronic device 100 shown in FIG. 2, the electronic device 100' further includes an application processor (application processor, AP) 30, and the AP 30 includes a ROM 31. The electronic device 100' may first use a storage space of the flash 22 (which is used as an example of the first storage space). Then, when the electronic device 100' determines that storage performance of the storage space of the flash 22 is exceptional, display data in the storage space of the flash 22 may be transferred to a storage space (which is used as an example of the second storage space) of the ROM 31 of the AP 30 for storage, to avoid an exception of the stored display data caused by the exceptional storage performance of the flash 22.

S104: The electronic device determines whether the first display data transferred to the second storage space is exceptional. If the electronic device determines that the first display data transferred to the second storage space is exceptional, step S103 is performed. If the electronic device determines that the first display data transferred to the second storage space is not exceptional, step S105 is performed.

In some embodiments, after transferring the display data in the first storage space to the second storage space, the electronic device may check the display data transferred to the second storage space, to determine whether the display data transferred to the second storage space is consistent with the display data in the first storage space before the transfer. If the display data transferred to the second storage space is consistent with the display data in the first storage space before the transfer, it is determined that the display data transferred to the second storage space is normal. If the display data transferred to the second storage space is inconsistent with the display data in the first storage space before the transfer, it is determined that the display data transferred to the second storage space is exceptional.

For example, the electronic device may check the display data transferred to the second storage space by using a check method such as CRC, checksum, hash check, or an ECC, to determine whether the display data transferred to the second storage space is consistent with the display data in the first storage space before the transfer. When the electronic device determines that the display data transferred to the second storage space is inconsistent with the display data in the first storage space before the transfer, the electronic device needs to re-transfer the display data in the first storage space to the second storage space.

S105: The electronic device replaces the first storage space with the second storage space.

After the electronic device determines that the display data transferred to the second storage space is normal, the electronic device may replace the first storage space with the second storage space, and no longer use the first storage space. After replacing the first storage space with the second storage space, the electronic device may obtain second display data when the display subsequently displays the picture, and then store the second display data in the second storage space, to avoid an exception of the data.

In this embodiment of this application, the electronic device may determine, based on the display duration and the period in which the display data is written into the first storage space, a quantity of times the display data is written into the first storage space, to determine, based on the quantity of times the display data is written into the first storage space, whether storage performance of the first storage space is exceptional. In addition, when it is determined that the storage performance of the first storage space is exceptional, the display data in the first storage space is transferred to the second storage space that is normal for storage, and the second storage space is used to store the display data in a subsequent display process of the electronic device. In this way, it can be avoided that because the storage performance of the first storage space is exceptional, the stored display data is exceptional, brightness compensation for the display of the electronic device is exceptional, and further, displaying of the display of the electronic device is exceptional.

For ease of understanding, the following describes the technical solutions of this application with reference to specific examples.

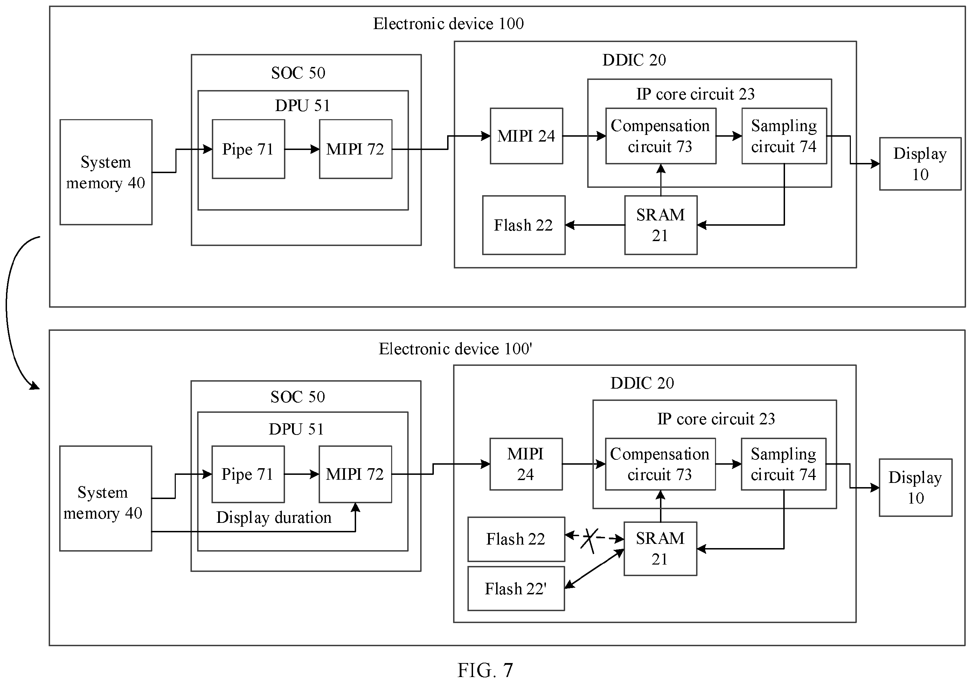

FIG. 7 is an example comparison diagram of a structure of an electronic device to which the technical solutions of this application are applicable.

Refer to FIG. 7. The electronic device 100 includes a system memory (system dram) 40, a system on chip (system on chip, SOC) 50, a DDIC 20, and a display 10. The SOC 50 includes a data processing unit (data processing unit, DPU) 51. The DPU 51 includes a pipe (pipe) 71, a mobile industry processor interface (mobile industry processor interface, MIPI) 72. The DDIC 20 includes an SRAM 21, a flash 22, an IP core circuit 23, a MIPI 24. The IP core circuit 23 includes a compensation circuit (de-burn-in gain) 73 and a sampling circuit (de-burn-in sample) 74. The system memory 40, the pipe 71 of the DPU 51, the MIPI 72 of the DPU 51, the MIPI 24 of the DDIC 20, the compensation circuit 73 of the IP core circuit 32, the sampling circuit 74 of the IP core circuit 23, and the display 10 are sequentially connected. In addition, the compensation circuit 73 of the IP core circuit 23, the sampling circuit 74 of the IP core circuit 23, and the SRAM 21 are connected in a ring manner. The SRAM 21 is connected to the flash 22.

After an application on the electronic device 100 finishes drawing an image, data of the drawn image is stored in the system memory 40. Then, the DPU 51 of the SOC 50 on the electronic device 100 continuously reads the data of the image from the system memory 40, and transmits the data of the image to the IP core circuit 23 sequentially through the pipe 71 of the DPU 51, the MIPI 72 of the DPU 51, and the MIPI 24 of the DDIC 20. The data of the image is converted from a digital signal into an analog signal after passing through the compensation circuit 73 and the sampling circuit 74 of the IP core circuit 23. Then, the DDIC 20 drives the display 10 to display by using the converted analog signal.

In a display process of the display 10 of the electronic device 100, the electronic device 100 continuously collects display data of the display 10, for example, brightness, a gray scale, a temperature, and a frame rate, and stores the collected display data in the system memory 40. Then, the DPU 51 of the SOC 50 on the electronic device 100 obtains the display data of the display 10 from the system memory 40, and sequentially transmits the display data to the sampling circuit 74 through the pipe 71, the MIPI 72, the MIPI 24, and the compensation circuit 73, and the sampling circuit 74 periodically samples the display data, and then writes the sampled display data into the flash 22 through the SRAM 21 for storage.

After the display data of the display 10 of the electronic device 100 is stored in the flash 22, when performing brightness compensation on an aged pixel unit on the display 10, the DDIC 20 may send the display data in the flash 22 back to the compensation circuit 73 of the IP core through the SRAM 21. The compensation circuit 73 determines a corresponding compensation voltage based on the display data, and then supplies the compensation voltage for the aged pixel unit on the display 10 through the sampling circuit 74, to perform brightness compensation on the aged pixel unit on the display 10.

However, as described above, a quantity of erase/write times of the flash 22 is limited. When a quantity of times the display data is written into the flash 22 is excessive, an exception occurs in the stored display data, which causes exceptional brightness compensation for the display 10 of the electronic device 100. As a result, when the display 10 of the electronic device 100 is displayed, an exceptional phenomenon of aging such as dimness or partial image residue occurs, which affects a service life of the display 10.

In view of this, on a basis of the electronic device 100, a flash 22' is added to the inside of the DDIC 20 of the electronic device 100' as a backup. In a display process of the display 10 of the electronic device 100, the electronic device 100 collects statistics on display duration of the display 10 and stores the display duration in the system memory 40. Then, the DPU 51 of the SOC 50 reads the display duration of the display 10 from the system memory 40, and transmits the display duration to the IP core circuit 23 through the MIPI 72 and the MIPI 24 of the DDIC 20. Then, the IP core circuit 23 calculates, based on the display duration of the display 10 and the period in which the flash 22 writes the display data, the quantity of times the flash 22 writes the display data. When the quantity of times the flash 22 writes the display data is greater than a preset quantity of times, the DDIC 20 replaces the flash 22 with the flash 22', and transfers the display data in the flash 22 to the flash 22' for storage. In this way, an exception of the stored display data can be avoided, and a service life of the display 10 can be prolonged. For example, the flash 22' having a same specification as the flash 22 is added to the electronic device 100, so that the service life of the display 10 of the electronic device 100 can be prolonged by two times.

In some other embodiments, more flashes may be added to the DDIC 20, to further prolong the service life of the display 10. A principle thereof is consistent with the foregoing description content. Details are not described herein again.

In another embodiment, the electronic device 100' described in FIG. 7 may be further transformed to achieve the same effect as the electronic device 100'.

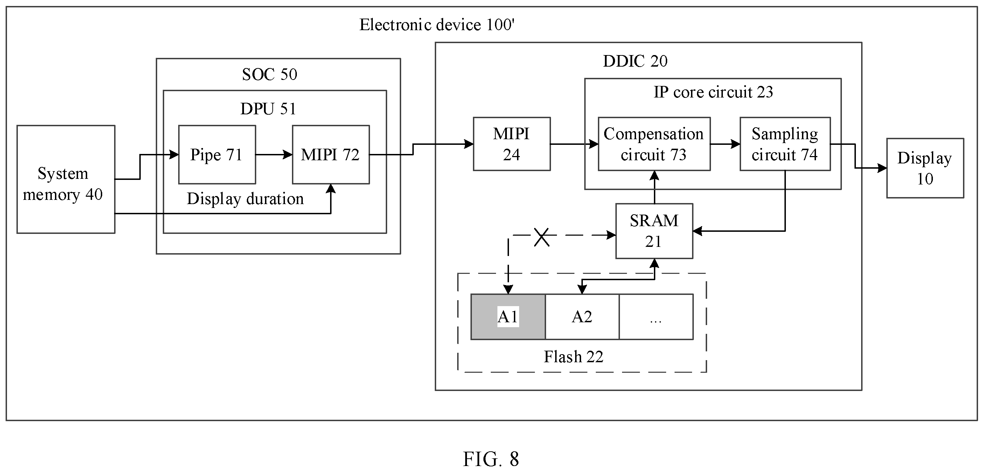

For example, as shown in FIG. 8, the electronic device 100' does not add the flash to the DDIC 20, but divides the flash 22 into a plurality of storage spaces: a storage space A1, a storage space A2, .... When the quantity of times the display data is written into the storage space A1 of the flash 22 is greater than the preset quantity of times, the storage space A1 may be replaced with the storage space A2, and the display data in the storage space A1 is transferred to the storage space A2 for storage.

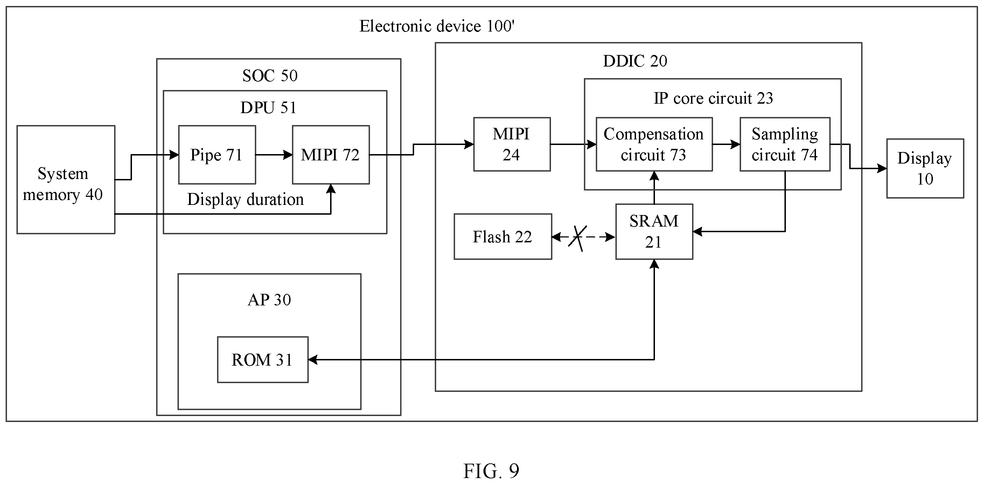

For another example, as shown in FIG. 9, the electronic device 100' does not add the flash to the DDIC 20. Instead, when the quantity of times the flash 22 writes the display data is greater than the preset quantity of times, the flash 22 is replaced with the ROM 31 of the AP 30 of the SOC 50, and the display data in the flash 22 is transferred to the ROM 31 of the AP 30 for storage.

The foregoing describes the technical solutions of this application only from a hardware layer. The following describes the technical solutions of this application by using a combination of software and hardware.

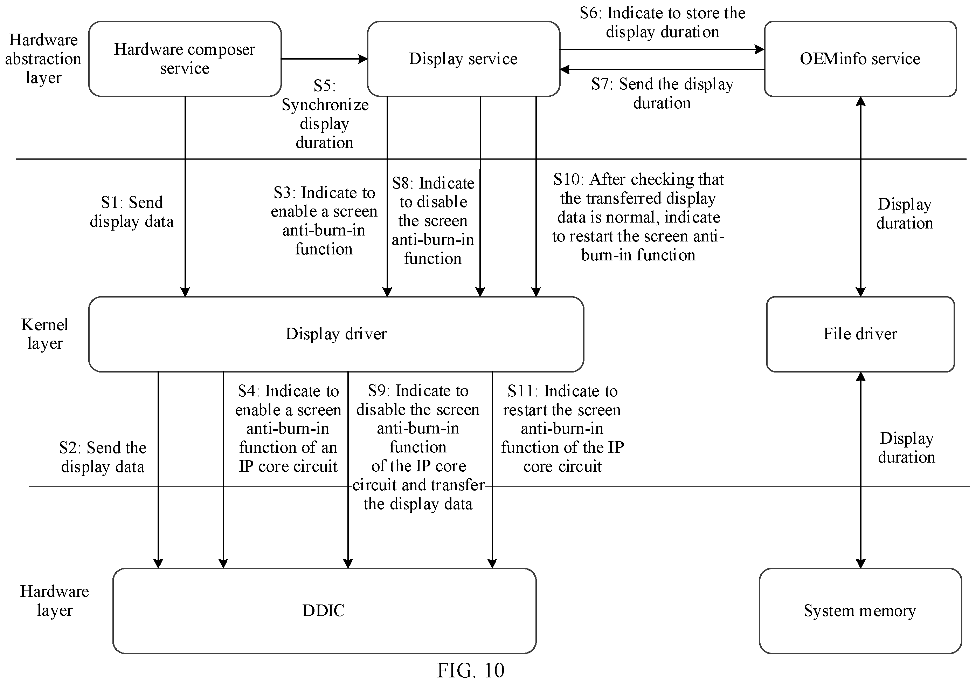

FIG. 10 is an example diagram of an architecture of a hardware and software system of an electronic device according to an embodiment of this application.

As shown in FIG. 10, the system includes a hardware abstraction layer (hardware abstract layer, HAL), a kernel (kernel) layer, and a hardware (hardware) layer.

The hardware abstraction layer includes a hardware composer service (hardware composer service), a display service (display service), and an original equipment manufacturer information (original equipment manufacturer information, OEMinfo) service. The hardware composer service is responsible for work such as display status management, image composition, and image sending and displaying. The display service is responsible for work such as DDIC status management and policy decision-making for a screen anti-burn-in algorithm. The OEMinfo service is responsible for work such as data storage and upgrading and restoring factory data security.

The kernel layer includes a display driver (display drivers) and a file driver (file drivers). The display driver is responsible for work such as a hardware driver of a display and MIPI instruction sending and receiving. The file driver is responsible for storing a kernel driver.

The hardware layer includes a DDIC and a system memory. The DDIC is responsible for work such as driving the display to display, storing display data of the display, and performing brightness compensation on the display based on the display data. The system memory is responsible for storing data such as user behavior data, a quantity of screen-on times, and screen-on time.

The following describes a data storage method in an embodiment of this application with reference to the example diagram of the architecture of the hardware and software system of the electronic device shown in FIG. 10.

Refer to FIG. 10. The method includes the following steps.

S1: The hardware composer service sends the display data to the display driver.

In a display process of the electronic device, the hardware composer service may send the display data of the electronic device to the display driver.

S2: The display driver sends the display data to the DDIC.

After receiving the display data sent by the hardware composer service, the display driver may send the display data to the DDIC, and the DDIC writes the display data into the flash of the DDIC for storage.

S3: The display service indicates the display driver to enable a screen anti-burn-in function.

The screen anti-burn-in function is a function that compensates for brightness of the display of the electronic device.

When the electronic device needs to perform brightness compensation on the display, the display service may notify the display driver to enable the screen anti-burn-in function.

S4: The display driver indicates the DDIC to enable the screen anti-burn-in function of the IP core circuit.

After receiving the notification from the display service, the display driver may notify the DDIC to enable the screen anti-burn-in function of the IP core circuit.

S5: The hardware composer service synchronizes display duration to the display service.

In a display process of the electronic device, the hardware composer service may collect statistics on the display duration of the electronic device, and synchronize the display duration to the display service.

S6: The display service indicates the OEMinfo service to store the display duration.

After the display service receives the display duration synchronized by the hardware composer service, it may notify the OEMinfo service to store the display duration of the electronic device and synchronize the display duration to the OEMinfo service, so that the OEMinfo service invokes the file driver to store the display duration of the electronic device in a non-erasable partition of the system memory, for example, a system partition and a boot partition, and the display duration is not erased when the user restores factory settings or restarts the electronic device. Alternatively, the display duration of the electronic device may be stored in another non-volatile memory, for example, a ROM or a programmable read-only memory (programmable read-only memory, PROM).

S7: The OEMinfo service sends the display duration to the display service.

When brightness compensation is performed on the display of the electronic device, the display service may notify the OEMinfo service to read the display duration. After receiving the notification from the display service, the OEMinfo service may invoke the file driver to read the display duration of the electronic device from the system memory, and send the duration to the display service.

S8: The display service indicates the display driver to disable the screen anti-burn-in function.

After receiving the display duration sent by the OEMinfo service, the display service may calculate, based on the display duration and the period in which the flash of the DDIC writes the display data, the quantity of times the flash writes the display data. When the quantity of times the flash writes the display data is greater than the preset quantity of times, the display service may notify the display driver to disable the screen anti-burn-in function.

S9: The display driver indicates the DDIC to disable the screen anti-burn-in function of the IP core circuit and transfer the display data.

After the display driver receives the notification from the display service to disable the screen anti-burn-in function, the display driver may notify the DDIC to disable the screen anti-burn-in function of the IP core, and transfer the display data stored in the flash to a backup flash for storage. For example, the data stored in the flash 22 of the DDIC 20 of the electronic device 100' shown in FIG. 7 is transferred to the flash 22' for storage.

S10: After checking that the transferred display data is normal, the display service indicates the display driver to restart the screen anti-burn-in function.

After the DDIC transfers the display data in the flash to the backup flash, the display service may check the display data transferred to the backup flash. After a check result indicates that the transferred display data is normal, the display service may notify the display driver to restart the screen anti-burn-in function.

S11: The display driver indicates the DDIC to restart the screen anti-burn-in function of the IP core circuit.

After the display driver receives the notification sent by the display service to restart the screen anti-burn-in function, the display driver may notify the DDIC to restart the screen anti-burn-in function of the IP core circuit, so that the DDIC restarts the screen anti-burn-in function of the IP core circuit, and uses the backup flash to store the display data of the electronic device.

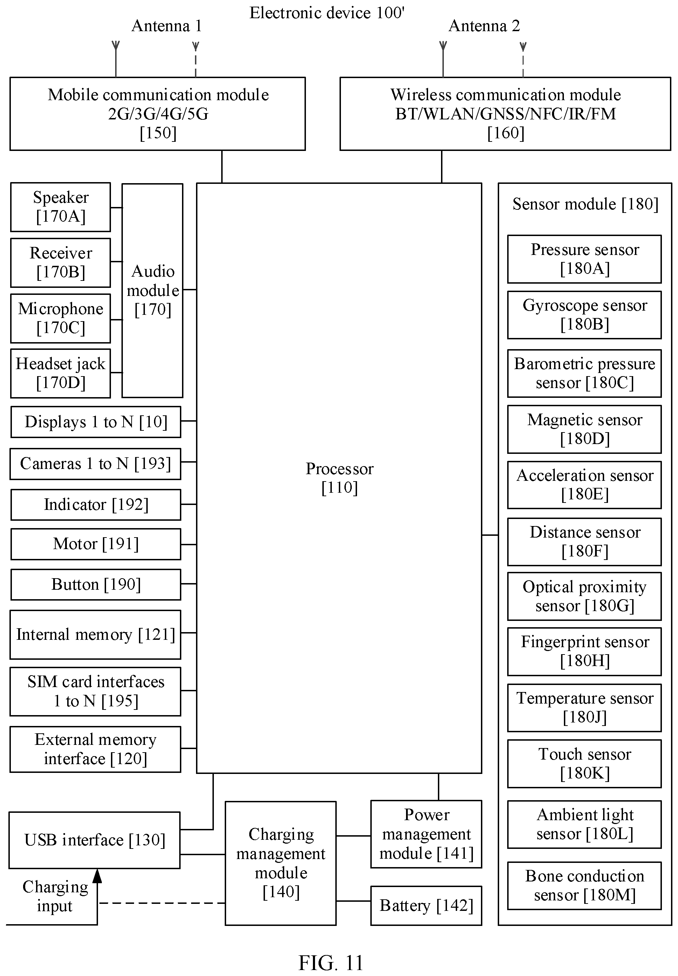

FIG. 11 is a diagram of a structure of an electronic device 100'. The electronic device 100' may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 10, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The internal memory 121 may be the first storage medium or the second storage medium mentioned in this application, and is configured to store display data of the electronic device 100'.

It may be understood that the structure illustrated in the embodiments of this application does not constitute a specific limitation on the electronic device 100'. In some other embodiments of this application, the electronic device 100' may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an AP, a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and the like.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100'. While charging the battery 142, the charging management module 140 may also supply power to the electronic device through the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 10, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100' may be implemented by the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100' may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100' and that includes 2G/3G/4G/5G or the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (not limited to the speaker 170A, the receiver 170B, and the like), and displays an image or a video through the display 10. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100' and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100' are coupled, and the antenna 2 and the wireless communication module 160 in the electronic device 100' are coupled, so that the electronic device 100' can communicate with a network and another device by using a wireless communication technology.

The electronic device 100' may implement a display function through the GPU, the display 10, the application processor, and the like. The GPU is a microprocessor for image processing, and is connected to the display 10 and the application processor. The GPU is configured to perform mathematical and geometric computation, and render an image. The processor 110 may include one or more GPUs that execute program instructions to generate or change display information.

The display 10 is configured to display an image, a video, and the like. The display 10 includes a display panel. In some embodiments, the electronic device 100' may include 1 or N displays 10. N is a positive integer greater than 1.

The electronic device 100' may implement a photographing function through the ISP, the camera 193, the video codec, the GPU, the display 10, the application processor, and the like.

The external memory interface 120 may be used to be connected to an external storage card, for example, a Micro SD card, to extend a storage capability of the electronic device 100'. The external memory card communicates with the processor 110 through the external memory interface 120, to implement a data storage function. For example, files such as messages and videos are stored in the external storage card.

The internal memory 121 may be configured to store a computer-executable program code, and the computer-executable program code includes instructions. The internal memory 121 may include a program storage area and a data storage area. The storage program area may store the operating system, an application program required by at least one function (for example, an image playing function), and the like. The data storage area may store data (for example, audio data or a phone book) and the like created in a process of using the electronic device 100'. In addition, the internal memory 121 may include a high-speed random access memory, or may include a non-volatile memory, for example, at least one magnetic disk storage device, or a flash storage device. The processor 110 runs instructions stored in the internal memory 121 and/or instructions stored in the memory disposed in the processor, to perform various function applications of the electronic device 100' and data processing.

The embodiments disclosed in this application may be implemented by hardware, software, firmware, or a combination of these implementation methods. The embodiments of this application may be implemented as computer program or program code executed on a programmable system. The programmable system includes at least one processor, a storage system (including a volatile memory and a non-volatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system having a processor like a digital signal processor, a microcontroller, an application-specific integrated circuit, or a microprocessor.

The program code may be implemented in a high-level programming language or an object-oriented programming language to communicate with the processing system. The program code may alternatively be implemented by using an assembly language or a machine language when required. The mechanisms described in this application are not limited to the scope of any specific programming language. In any case, the language may be a compiled language or an interpretive language.

In some cases, the disclosed embodiments may be implemented by hardware, firmware, software, or any combination thereof. The disclosed embodiments may be alternatively implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, the machine-readable medium may include any mechanism used for storing or transmitting information in a machine (for example, a computer) readable form, including but not limited to, a floppy disk, a compact disc, an optical disc, a magneto-optical disc, a read only memory (read only memory, ROM), a random access memory (random access memory, RAM), an erasable programmable read-only memory (erasable programmable read-only memory, EPROM), an electrically erasable programmable read only memory (electrically erasable programmable read only memory, EEPROM), a magnetic or optical card, a flash, or a tangible machine-readable memory used for transmitting information using the Internet through a propagation signal (for example, a carrier wave, an infrared signal, or a digital signal) in an electrical, optical, acoustic, or another form. Therefore, the machine-readable medium includes any type of machine-readable medium suitable for storing or transmitting electronic instructions or information in a form readable by a machine (for example, a computer).

In the accompanying drawings, some structural or method features may be shown in a particular arrangement and/or order. However, it should be understood that such a particular arrangement and/or order may not be needed. In some embodiments, these features may be arranged in a manner and/or sequence different from that shown in the descriptive accompanying drawings. In addition, inclusion of the structural or method features in a particular figure does not imply that such features are needed in all embodiments, and in some embodiments, these features may not be included or may be combined with other features.

An embodiment of this application further provides a computer-readable storage medium. The computer-readable storage medium stores a computer program. When the computer program is executed by a processor, the processor can implement the steps in the foregoing method embodiments.

It should be noted that all units/modules mentioned in device embodiments of this application are logical units/modules. Physically, one logical unit/module may be one physical unit/module, may be a part of one physical unit/module, or may be implemented by a combination of a plurality of physical units/modules. Physical implementations of these logical units/modules are not the most important, and a combination of functions implemented by these logical units/modules is a key to resolving the technical problem provided in this application. In addition, to highlight an innovative part of this application, a unit/module that is not closely related to resolving the technical problem provided in this application is not introduced in the foregoing device embodiments of this application. This does not indicate that there is not another unit/module in the foregoing device embodiments.

It should be noted that, in the examples and specification of this patent, relational terms such as first and second are merely used to distinguish one entity or operation from another entity or operation, and do not necessarily require or imply that there is any such actual relationship or sequence between these entities or operations. Moreover, the terms "include", "comprise", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the scope of this application.

## Claims

1. A data storage method, applied to an electronic device, wherein the electronic device comprises a first storage space and a second storage space; and the method comprises:

   writing first display data into the first storage space;
   determining that a first quantity of times data is written into the first storage space is greater than a preset quantity of times, wherein the first quantity of times is determined based on duration in which the electronic device displays a picture and a first period in which the data is written into the first storage space when the electronic device displays the picture; and
   transferring the first display data to the second storage space.

2. The method according to claim 1, wherein the method further comprises:
   obtaining second display data, and storing the second display data in the second storage space.

3. The method according to claim 1 or 2, wherein the display data is used to compensate for brightness of the picture displayed by the electronic device.

4. The method according to claim 3, wherein the display data comprises at least one of the following: brightness, a gray scale, a temperature, and a frame rate.

5. The method according to claim 1, wherein the first period is a period in which the display data is written into the first storage space when the electronic device displays the picture.

6. The method according to claim 1, wherein the first storage space and the first storage space are provided in a first storage medium of the electronic device.

7. The method according to claim 1, wherein the first storage space is provided in a first storage medium of the electronic device, and the second storage space is provided in a second storage medium of the electronic device.

8. The method according to claim 7, wherein the first storage medium and the second storage medium are provided on a first chip of the electronic device.

9. The method according to claim 7, wherein the first storage medium is provided on a first chip of the electronic device, and the second storage medium is provided on a second chip of the electronic device.

10. The method according to claim 9, wherein the first chip comprises a display driver integrated circuit, and the second chip comprises a system on a chip.

11. The method according to claim 1, wherein the transferring the first display data to the second storage space comprises:

    checking the display data transferred to the second storage space, to obtain a check result; and
    corresponding to the check result indicating that the display data transferred to the second storage space is exceptional, re-transferring the first display data in the first storage space to the second storage space.

12. An electronic device, comprising:

    a memory, configured to store instructions to be executed by one or more processors of the electronic device; and
    a processor, wherein when the processor executes the instructions in the memory, the electronic device is enabled to perform the data storage method according to any one of claims 1 to 11.

13. A computer-readable storage medium, wherein the computer-readable storage medium stores instructions; and when the instructions are executed on a computer, the computer is enabled to perform the data storage method according to any one of claims 1 to 11.

FIG. 1

Electronic device 100

DDIC 20

IP core
circuit 23

Compensation
voltage

Display 10

Display
data

Display
data

Flash 22

SRAM 21

FIG. 2

An electronic device writes first display data into a first storage space

S101

The electronic device determines that a first quantity of times the display data is written into the first storage space is greater than a preset quantity of times, where the first quantity of times is determined based on display duration of the electronic device and a first period in which the display data is written into the first storage space

S102

The electronic device transfers the first display data in the first storage space to a second storage space

S103

The electronic device determines whether the first display data transferred to the second storage space is exceptional

S104

Yes

No

The electronic device replaces the first storage space with the second storage space

S105

FIG. 3

Electronic device 100'

DDIC 20

Compensation voltage

IP core circuit 23

Display data

Flash 22 ⟷ ✕ ⟷ SRAM 21

Flash 22'

Display data

Display 10

FIG. 4

Electronic device 100'

DDIC 20

Compensation voltage

IP core circuit 23

Display data

Flash 22

A1 | A2 | ...

SRAM 21

Display data

✕

Display 10

FIG. 5

FIG. 6

EP 4 776 112 A1

Electronic device 100

SOC 50

DPU 51

Pipe 71 → MIPI 72

System memory 40

DDIC 20

IP core circuit 23

MIPI 24 → Compensation circuit 73 → Sampling circuit 74

Flash 22 ← SRAM 21

Display 10

Electronic device 100'

SOC 50

DPU 51

Pipe 71 → MIPI 72

Display duration

System memory 40

DDIC 20

IP core circuit 23

MIPI 24 → Compensation circuit 73 → Sampling circuit 74

Flash 22 ⟷ SRAM 21

Flash 22'

Display 10

FIG. 7

FIG. 8

FIG. 9

EP 4 776 112 A1

| Hardware abstraction layer | Hardware composer service | | Display service | | OEMinfo service |

S6: Indicate to store the display duration

S5: Synchronize display duration

S7: Send the display duration

S1: Send display data

S3: Indicate to enable a screen anti-burn-in function

S8: Indicate to disable the screen anti-burn-in function

S10: After checking that the transferred display data is normal, indicate to restart the screen anti-burn-in function

Display duration

Kernel layer — Display driver

File driver

S2: Send the display data

S4: Indicate to enable a screen anti-burn-in function of an IP core circuit

S9: Indicate to disable the screen anti-burn-in function of the IP core circuit and transfer the display data

S11: Indicate to restart the screen anti-burn-in function of the IP core circuit

Display duration

Hardware layer — DDIC

System memory

FIG. 10

Electronic device 100'

Antenna 1          Antenna 2

| Mobile communication module<br>2G/3G/4G/5G<br>[150] | Wireless communication module<br>BT/WLAN/GNSS/NFC/IR/FM<br>[160] |

Speaker [170A]

Receiver [170B]

Audio module [170]

Microphone [170C]

Headset jack [170D]

Displays 1 to N [10]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Processor [110]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 11

## INTERNATIONAL SEARCH REPORT

| | International application No. |
| --- | --- |
| | **PCT/CN2024/106149** |

**A. CLASSIFICATION OF SUBJECT MATTER**

G06F3/06(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 闪存, 存储, 擦写, 次数, 显示, 亮度, 温度, 帧率, 灰阶, 校验, 刷新率, 异常, 阈值, flash, memory, erase, frequency, display, brightness, temperature, frame rate, gray level, check, refresh rate, abnormal, threshold

**C. DOCUMENTS CONSIDERED TO BE RELEVANT**

| Category* | Citation of document, with indication, where appropriate, of the relevant passages | Relevant to claim No. |
| --- | --- | --- |
| Y | CN 114296634 A (GREE ELECTRIC APPLIANCES INC. OF ZHUHAI) 08 April 2022 (2022-04-08)<br>    paragraphs 47-106, and figures 1-6 | 1-13 |
| Y | US 2009015604 A1 (SEMICONDUCTOR ENERGY LABORATORY CO., LTD.) 15 January 2009 (2009-01-15)<br>    paragraphs 20-44 | 1-13 |
| Y | CN 105260135 A (TCL MOBILE COMMUNICATION TECHNOLOGY (NINGBO) CO., LTD.) 20 January 2016 (2016-01-20)<br>    paragraphs 24-45, and figures 1-4 | 1-13 |
| A | CN 107766008 A (GREE ELECTRIC APPLIANCES INC. OF ZHUHAI) 06 March 2018 (2018-03-06)<br>    entire document | 1-13 |
| A | CN 102034459 A (HOLTEK SEMICONDUCTOR INC.) 27 April 2011 (2011-04-27)<br>    entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 October 2024** | **12 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/106149**

| Patent document cited in search report | | | Publication date (day/month/year) | Patent family member(s) | | | Publication date (day/month/year) |
|---|---|---|---|---|---|---|---|
| CN | 114296634 | A | 08 April 2022 | CN | 114296634 | B | 30 January 2024 |
| US | 2009015604 | A1 | 15 January 2009 | KR | 20070059195 | A | 11 June 2007 |
| | | | | KR | 101098778 | B1 | 26 December 2011 |
| | | | | WO | 2006035953 | A1 | 06 April 2006 |
| | | | | US | 8159478 | B2 | 17 April 2012 |
| | | | | JP | 2006119628 | A | 11 May 2006 |
| | | | | JP | 4653615 | B2 | 16 March 2011 |
| CN | 105260135 | A | 20 January 2016 | None | | | |
| CN | 107766008 | A | 06 March 2018 | None | | | |
| CN | 102034459 | A | 27 April 2011 | CN | 102034459 | B | 03 October 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311864567